(19) Europäisches Patentamt
European Patent Office
Office européen des brevets

(11) EP 0 976 768 B1

# (12) EUROPÄISCHE PATENTSCHRIFT

(45) Veröffentlichungstag und Bekanntmachung des Hinweises auf die Patenterteilung:
**22.09.2004 Patentblatt 2004/39**

(51) Int Cl.[7]: **C08F 20/36**, C08L 33/14, C08G 69/40, C08G 69/44

(21) Anmeldenummer: **99113904.9**

(22) Anmeldetag: **16.07.1999**

(54) **Oxazolingruppen tragende hochverzweigte Polymere, Verfahren zu ihrer Herstellung und Verwendung**

Oxazoline groups containing hyperbranched polymers, process for their preparation and their use

Polyméres hyperramifiés avec des groupes oxazolines, procédé de leur préparation et leur usage

(84) Benannte Vertragsstaaten:
**AT BE CH CY DE DK ES FI FR GB GR IE IT LI LU MC NL PT SE**

(30) Priorität: **25.07.1998 DE 19833626**

(43) Veröffentlichungstag der Anmeldung:
**02.02.2000 Patentblatt 2000/05**

(73) Patentinhaber: **Institut für Polymerforschung Dresden e.V.**
**01069 Dresden (DE)**

(72) Erfinder:
- **Huber, Thomas**
  **85399 Hallbergmoos (DE)**
- **Voit, Brigitte**
  **01187 Dresden (DE)**
- **Jakisch, Lothar**
  **08056 Zwickau (DE)**
- **Böhme, Frank**
  **01705 Pesterwitz (DE)**

(74) Vertreter: **Rauschenbach, Marion, Dipl.-Ing.**
**Rauschenbach Patentanwälte**
**Postfach 27 01 75**
**01172 Dresden (DE)**

(56) Entgegenhaltungen:
**DE-C- 19 812 409**

- **CHEMICAL ABSTRACTS, vol. 117, no. 6, 10. August 1992 (1992-08-10) Columbus, Ohio, US; abstract no. 49889, ITO, SEIJI ET AL: "Aromatic polyethers containing imino ether rings" XP002145001 & JP 04 076022 A (TEIJIN K. K., JAPAN) 10. März 1992 (1992-03-10)**
- **CHEMICAL ABSTRACTS, vol. 116, no. 24, 15. Juni 1992 (1992-06-15) Columbus, Ohio, US; abstract no. 236829, ITO, SEIJI ET AL: "Aromatic diols as crosslinking agents for heat- and chemically resistant thermosetting resins" XP002145002 & DATABASE WPI Derwent Publications Ltd., London, GB; & JP 04 013671 A ((TEIJI) TEIKOKU LTD, JAPAN), 17. Januar 1992 (1992-01-17) & JP 04 013671 A (TEIJIN LTD., JAPAN) 17. Januar 1992 (1992-01-17)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 976 768 B1

## Beschreibung

Die Erfindung bezieht sich auf das Gebiet der Chemie, insbesondere der Polymerchemie und betrifft Oxazolingruppen tragende hochverzweigte Polymere, die beispielsweise als Blendkomponenten, als Compatibilizer in Polymerblends oder als Vernetzer in Polymeren oder Polymerblends eingesetzt werden können.

Hochverzweigte Polymere, auch "hyperbranched" Polymere genannt, sind durch unterschiedliche Reaktionen herstellbar. Dabei haben Polykondensationsreaktionen große Bedeutung erlangt (D. A. Tomalia, H. D. Durst, *Top. Curr. Chem.* **165**, 194 (1993); A. Kumar, S. Ramakrishnan, *J. Chem. Soc. Commun*. 1453 (1993); F. Chu, C. J. Hawker, *Polym. Bull*. **30**, 265 (1993); Y. H. Kim, *J. Am. Soc*. **114**, 4947 (1992); B. I. Voit, *Acta Polym*. **46**, 87 (1995); K. Uhrich, C. J. Hawker, J. M. J. Fréchet, S. R. Turner, *Macromolecules* **25**, 4583 (1992)). Andere Möglichkeiten zur Bildung verzweigter Polymere, aber mit einem geringeren Stellenwert, bietet die lebend" kationische und lebend" radikalische Polymerisation (O. Nuyken, F. Gruber, S. D. Pask, A. Riederer, M. Walter, *Makromol. Chem*. **194**, 3415 (1993); C. J. Hawker, J. M. J. Fréchet, R. B. Grubbs, J. Dao, *J. Am. Soc.* **117**, 10763 (1995); J. M. J. Fréchet, H. Masahiro, I. Gitsov, S. Aoshima, M. R. Leduc, R. B. Grubbs, *Science* **269**, 1080 (1995); S. G. Gaynor, S. Edelman, K. Matyjazewsky *Macromolecules* **29**, 1079 (1993)). Dadurch sind hochverzweigte Polymere vieler Verbindungsklassen, wie Polyether, Polyester, Polyamide, Polyurethane und auch gemischter Verbindungsklassen, wie Polyesteramide, herstellbar (R. Spindler, J. M. J. Fréchet, *Macromolecules* **26,** 1453 (1993); V. Percec, M. Kawasumi, *Macromolecules* **25**, 3843 (1992); T. M. Miller, T. X. Neenan, E. W. Kwock, S. M. Stein, *Macromol. Symp*. **77**, 35 (1994); H. R. Kricheldorf, G. Löhden, *J. Macromol. Sci., Pure Appl. Chem.* **A32**(11), 1915 (1995); M. Jikei, Y. Gang, C. S. Hyun, M. -A. Kakimoto, *Polym. Mater. Sci. Eng*. **77**, 200 (1997); A. R. Brenner, D. Schmaljohann, D. Wolf, B. I. Voit, *Macromol. Symp*. **122** (International Symposium on Polycondensation, Related Processes and Materials, 1996, 1022 (1997); S. Russo, A. Boulares *Macromol. Symp.* **128**, 13 (1998)).

Die bekannten hochverzweigten Polyamide und Polyesteramide sind bisher ausschließlich über Polykondensationsreaktionen synthetisiert worden. Die entstehenden niedermolekularen Kondensationsnebenprodukte müssen dabei bei Bulkkondensationen durch Anlegen von Vakuum, bei Lösungspolykondensation durch Abdestillieren, aus dem Gleichgewicht entfernt werden, um hohe Molmassen zu erreichen. Zudem ist bei Polyesteramiden, wie sie von Kricheldorf et. al. beschrieben wurden, die Esterknüpfung der polymerbildende Schritt und nicht die Amidknüpfung. Unter diesen Reaktionsbedingungen werden Ester - Amid-Austauschreaktionen beobachtet, die eine Minderung des Verzweigungsgrades bewirken (H. R. Kricheldorf, O. Bolender, T. Stukenbrock, *Makromol. Chem. Phys.* **198**(9), 2651 (1997)).

Die Synthese von hochverzweigten Polymeren über Polyadditionsreaktionen mittels Oxazolinen ist bisher weder bekannt noch beschrieben worden.

Die in 2-Stellung substituierten 1, 3-Oxazoline, nachfolgend als 2-Oxazoline bezeichnet, bieten im Hinblick auf die Synthese und Modifizierung von linearen Polymeren vielfältige Reaktionsmöglichkeiten (W. Seeliger, E. Aufderhaar, W. Dieppers, R. Feinauer, R. Nehring, W. Thier, H. Hellmann, *Angew. Chem. Int. Ed*. **5**, 875 (1966); J. A. Frump, *Chem. Rev*. **71**, 483 (1971); T. G. Gant, A. I. Meyers, *Tetrahedron* **50**, 2297 (1994); S. Kobayashi, T. Saegusa, Ring Opening Polymerization Vol.2, Eds. K. J. Ivin, T. Saegusa, Applied Science, London, 1984, p. 761; S. Kobayashi, *Prog. Polym. Sci*. **15**, 751 (1990); K. Aoi, M. Okada, *Prog. Polym. Sci.* **21**, 151 (1996)). Die größte Bedeutung haben dabei die kationische Polymerisation, die Copolymerisation mit Elektrophilen und die ringöffnende Additionsreaktion mit Nukleophilen erlangt. Zu letzterem Reaktionstyp gehören die Reaktionen von 2- Oxazolinen mit Carbonsäuren, Phenolen, Thiolen und Aminen unter Bildung von Esteramiden, Etheramiden, Thioetheramiden und Aminoamiden. So werden beispielsweise Bis- 2- oxazoline als Kettenverlängerer bei carboxylgruppenterminierten Polyestern eingesetzt, um das Molekulargewicht zu erhöhen (H. Inata, S. Matsamura. *J. Appl. Polym. Sci.* **30**, 3325 (1985), *J. Appl. Polym. Sci*. **32**, 5193 (1986) und *J. Appl. Polym. Sci*. **33**, 3069 (1987)). Desweiteren werden di- und polyfunktionelle 2- Oxazoline bei der Härtung von Phenolharzen, Bis-2- oxazoline bei der Vernetzung von carbonsäuregruppenhaltigen Polymeren eingesetzt. Ferner ist die Vernetzung von Polymeren, die 2- Oxazolin- und Carbonsäuregruppen enthalten, bekannt.

Der Aufbau von linearen oder vernetzten Polymeren, die als Beschichtungsmassen, thermisch härtbare Harze, als Blendkomponenten oder als Fasern Verwendung finden, über eine Polyadditionsreaktion mit Bis- 2- oxazolinen und Dioder polyfunktionellen Polycarbonsäuren, -phenolen und -thiolen ist ebenfalls bereits beschrieben (DE 10 50 540; S. Kobayashi, *Prog. Polym. Sci*. **15**, 751 (1990); US 4,644,052; EP 097, 937; US 4,430,491; US 4,746,719; T. Nishikubo, T. Iizawa, M. Watanabe, *J. Polym. Sci., Part C: Polym. Lett.* **18**, 761 (1980)).

Ein wesentlicher Vorteil der Polyaddition ist, daß während der Reaktion keine niedermolekularen Nebenprodukte entstehen, die aus dem Reaktionsgleichgewicht entfernt werden müssen. Durch den Überschuß einer der vorhandenen reaktiven Gruppen im Monomer erhält man nach der Umsetzung zum einen hochverzweigte Polymere und zum anderen eine hohe Anzahl funktioneller Gruppen, die für weitere Umsetzungen von Vorteil sind. Die thermische Polymerisation von 2 - Oxazolinen mit Phenol-, Thiol- oder Carbonsäuregruppen im selben Molekül sind bisher nur für lineare Polymere bekannt. Hier berichten die Autoren allerdings über strukturuneinheitliche Produkte, die durch

das Auftreten von Nebenreaktionen wie z.B. die kationische Polymerisation der Oxazolingruppe verursacht werden (P. A. Gunatillake, G. Odian, D. A. Tomalia, *Macromolecules* **20**, 2356 (1987); . P. A. Gunatillake, G. Odian, D. A. Tomalia, *Macromolecules* **21**, 1556 (1988); G. Odian, F. Shi, *Macromolecules* **26**, 17 (1993); C. Wörner, P. Müller, R. Mülhaupt, *Polym. Bull.* (Berlin) **34**, 301 (1995)).

Versuche, gezielt hochverzweigte Polymere via Polyadditionsreaktionen über Monomere mit 2- Oxazolingruppen und Phenol-, Carbonsäure- , Mercapto- oder Amino- Gruppen aufzubauen, sind bisher nicht bekannt oder beschrieben worden.

Aufgabe der vorliegenden Erfindung ist es, ein Verfahren zur Herstellung von Oxazolingruppen tragenden hochverzweigten Polymeren anzugeben, durch das es möglich wird, hochverzweigte Polymere mit einer hohen Funktionalität zu erhalten, die für weitere Modifizierungsreaktionen eingesetzt werden können.

Die Aufgabe wird gelöst durch Oxazolingruppen tragende hochverzweigte Polymere, welche aus Einheiten, die von der Struktur der allgemeinen Formel 1 abgeleitet sind, aufgebaut sind,

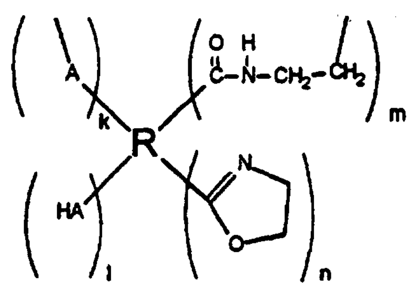

1

und bei denen die einzelnen Einheiten über eine einfache chemische Bindung der freien Valenz des Strukturelements A- und der freien Valenz des Strukturelements $CO-NH-CH_2-CH_2-$ verbunden sind, wobei R einen Aryl-, Aralkyl- oder Aralkylenrest mit 0 bis 6 Heteroatomen darstellt, A ein aromatisch gebundenes Sauerstoffatom, ein gebundenes Schwefelatom, eine mit dem Stickstoff an R gebundene NH- Gruppe oder eine mit dem Kohlenstoffatom an R gebundene C(O)O-Gruppe darstellt und k, l, m und n ganze Zahlen von 0 bis 2 sind, welche die Anzahl der jeweiligen Substituenten (-A-, -AH, $-CO-NH-CH_2-CH_2-$ und 2-Oxazolin) mit direkter Bindung an R angibt, und die Summe aus k, l, m und n gleich 3 ist und für jede nach der Struktur der allgemeinen Formel 1 abgeleitete in einem Polymer befindliche Einheit entweder gilt, daß die Summe aus k und l oder die Summe aus n und m gleich 2 ist.

Besonders vorteilhafte Ausführungsformen der Erfindung sind:

Ausführungsform A

Eine besondere Ausführungsform der Erfindung ist ein hochverzweigtes Polyetheramid bei dem in der Struktur nach Formel 1 R eine Struktur nach Formel 2,

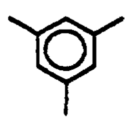

2

A ein Sauerstoffatom und die Summe aus k und l gleich 2 sind. Dieses Polyetheramid ist überwiegend aus Einheiten der Struktur nach Formel 3, 4 und 5 aufgebaut

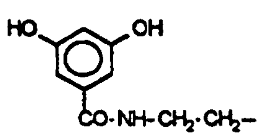

3

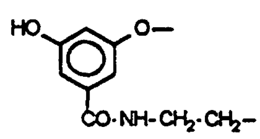

4

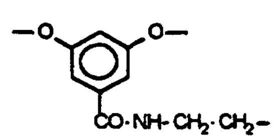

5

und enthält maximal eine der fokalen 2-Oxazolingruppen 6 oder 7 pro Makromolekül.

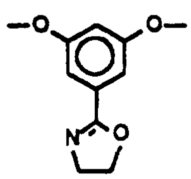

6

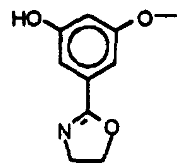

7

Ausführungsform B

Eine weiter besondere Ausführungsform der Erfindung ist ein hochverzweigtes Polyetheramid bei dem in der Struktur nach Formel 1 R eine Struktur nach Formel 2, A ein Sauerstoffatom und die Summe aus m und n gleich. 2 sind. Dieses Polyetheramid ist überwiegend aus Einheiten der Struktur nach Formel 8, 9 und 10 aufgebaut

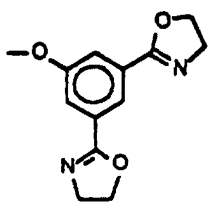

8

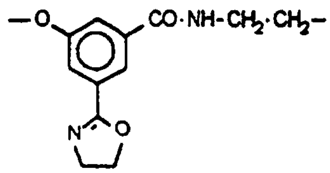

9

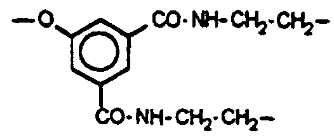

10

und enthält maximal eine der fokalen aromatischen Hydroxylgruppen 11 oder 12 pro Makromolekül.

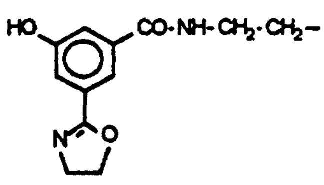

11

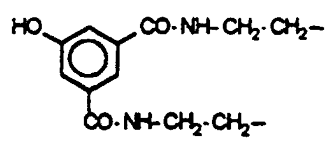

12

Ausführungsform C

Eine weitere besondere Ausführungsform der Erfindung ist ein hochverzweigtes Polyesteramid bei dem in der Struktur nach Formel 1 R eine Struktur nach Formel 2, A eine mit dem Kohlenstoffatom an R gebundene C(O) O-Gruppe und die Summe aus k und l gleich 2 sind. Dieses Polyesteramid ist überwiegend aus Einheiten der Struktur nach Formel 13, 14 und 15 aufgebaut

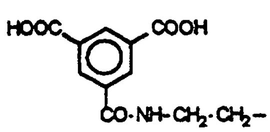

13

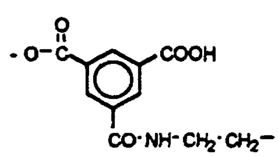

14

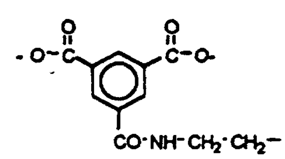

15

und enthält maximal eine der fokalen 2-Oxazolingruppen 16 oder 17 pro Makromolekül.

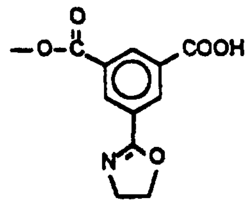

16

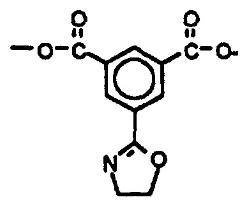

17

Ausführungsform D

Eine weitere besondere Ausführungsform der Erfindung ist ein hochverzweigtes Polyesteramid bei dem in der Struktur nach Formel 1 R eine Struktur nach Formel 2, A eine mit dem Kohlenstoffatom an R gebundene C(O)O-Gruppe und die Summe aus m und n gleich 2 sind. Dieses Polyesteramid ist überwiegend aus Einheiten der Struktur nach Formel 18, 19 und 20 aufgebaut

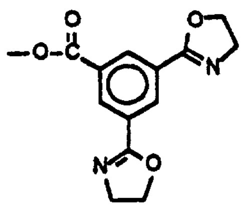

18

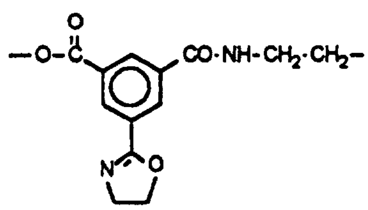

19

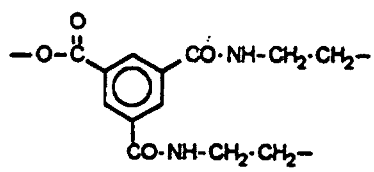

20

und enthält maximal eine der fokalen Carboxylgruppen 21 oder 22 pro Makromolekül.

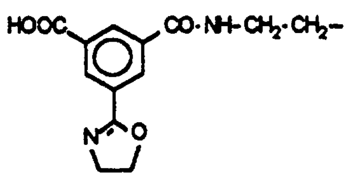

21

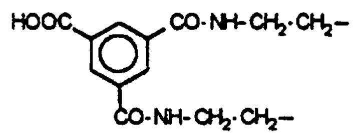

22

Die fokalen Gruppen der hochverzweigten Polyesteramide und Polyetheramide nach Ausführungsform A, B, C und D können durch interne Reaktionen in gebundener Form vorliegen.

Die Herstellung der erfindungsgemäßen Oxazolingruppen tragenden hochverzweigten Polymere erfolgt über an sich bekannte Additionsreaktionen der 2-Oxazolingruppe mit aromatischen Hydroxylgruppen, Carbonsäure-, Thiol- oder Aminogruppen. Die erfindungsgemäßen hochverzweigten Polymere werden aus einem multivalenten Monomer der allgemeinen Struktur 23

$$(S1)_m\text{-}R\text{-}(S2)_n \qquad 23$$

bei dem R identisch mit R in Struktur 1 ist, S1 eine in ihrer 2-Position an R gebundene 2-Oxazolingruppe ist, S2 eine

aromatische Hydroxyl-, eine Carbonsäure-, Thiol- oder Aminogruppe darstellt, n und m 1 oder 2 ist und die Summe aus m und n gleich 3 ist, hergestellt. Es sind auch Monomere einsetzbar, bei denen n oder m = 1 und die Summe aus n + m > 3 ist.

Die Polymerisation der Monomere erfolgt thermisch in Substanz oder in Gegenwart eines inerten Lösungsmittels, vorzugsweise N-Methylcaprolactam oder Tetramethylensulfon (Sulfolan), mit oder ohne Zusatz eines Katalysators wie z.B. Lithiumchlorid, bei Temperaturen von 150 bis 300 °C unter Inertgas innerhalb von 2 min bis 30 h. Die in Lösung hergestellten erfindungsgemäßen Polymere lassen sich auf einfache Art und Weise durch Fällung aus einem Lösemittel, wie Methanol oder Wasser, isolieren.

Die Monomere nach der allgemeinen Struktur 23 können aus Derivaten entsprechender Hydroxycarbonsäuren, Polycarbonsäuren, Thiolcarbonsäuren oder Aminocarbonsäuren (Alkylester oder Säurechloride) nach an sich bekannten Verfahren zur Synthese von 2-Oxazolinen hergestellt werden.

Monomer zur Herstellung erfindungsgemäßer hochverzweigter Polyetheramide nach der besonderen Ausführungsform A ist die Verbindung nach Struktur 24,

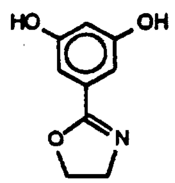

24

Die Synthese des Monomers 24 erfolgt durch Umsetzung von 3,5-Hydroxybenzoesäuremethylester mit 2-Ethanolamin und anschließender Zyklisierung in Gegenwart von Thionylchlorid bei einer Temperatur von 0 °C.

Monomer zur Herstellung erfindungsgemäßer hochverzweigter Polyetheramide nach der besonderen Ausführungsform B ist die Verbindung nach Struktur 25.

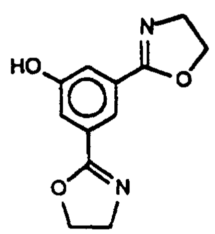

25

Die Synthese des Monomers 25 erfolgt durch Umsetzung von 5-Hydroxyisophthalsäuredimethylester mit 2-Ethanolamin und anschließender Zyklisierung in Gegenwart von Thionylchlorid bei einer Temperatur von 0 °C.

Monomer zur Herstellung erfindungsgemäßer hochverzweigter Polyesteramide nach der besonderen Ausführungsform C ist die Verbindung nach Struktur 26.

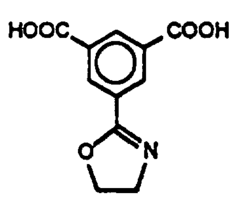

26

Die Synthese des Monomers 26 erfolgt durch Umsetzung von 1,3,5-Benzoltricarbonsäuredimethylesterchlorid mit 2-Chlorethylammoniumchlorid in Gegenwart eines Säurefängers, wie z.B. Triethylamin, und anschließender Umsetzung mit methanolischer KOH unter gleichzeitiger Verseifung der Estergruppen zu Carbonsäuregruppen

Monomer zur Herstellung erfindungsgemäßer hochverzweigter Polyesteramide nach der besonderen Ausführungsform D ist die Verbindung nach Struktur 27.

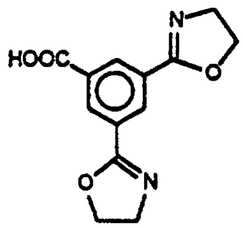

27

Die Synthese des Monomers 27 erfolgt durch Umsetzung von 1,3,5-Henzoltricarbonsäuremonomethylesterdichlorid mit 2-Chlorethylammoniumchlorid in Gegenwart eines Säurefängers wie z.B. Triethylamin und anschließender Umsetzung mit methanolischer KOH unter gleichzeitiger Verseifung der Estergruppe zur Carbonsäuregruppe.

Durch den Überschuß einer der vorhandenen Gruppen S1 oder S2 im Monomer verbleiben die im Überschuß befindlichen Gruppen nach der Umsetzung im entstehenden Polymer und bilden deren hohe Funktionalität. Vorteil der angewandten Additionsreaktion ist, daß im Unterschied zu Polykondensationsreaktionen keine Nebenprodukte entstehen und sich damit die Herstellung derartiger hochverzweigter, nicht vernetzter Polymere vereinfacht. Überraschend finden bei der Polyaddition auch keine Nebenreaktionen z. B. bei Struktur 24 statt, wie sie beispielsweise bei divalenten Verbindungen mit gleichen funktionellen Gruppen gefunden werden.

Besonders wertvoll sind die hochverzweigten Polymere, die eine hohe Funktionalität an 2-Oxazolingruppen besitzen, welche zahlreiche Reaktionen mit nucleophilen Verbindungen eingehen können und dadurch vielfältige Anwendungen eröffnen. Die erfindungsgemäßen Oxazolingruppen tragenden hochverzweigten Polymere können als Additive zu unterschiedlichen Polymeren zugesetzt werden, wodurch Schmelzviskositäten, Polarität und andere Eigenschaften gezielt beeinflußt werden können. Weiterhin können die erfindungsgemäßen Verbindungen als Blendkomponenten, als Compatibilizer in Polymerblends oder als Vernetzer in Polymeren oder Polymerblends Verwendung finden.

Im weiteren wird die Erfindung an mehreren Ausführungsbeispielen näher erläutert.

Die Beispiele 1 bis 3 beziehen sich auf die Synthese von hochverzweigten Polyetheramiden mit phenolischen Endgruppen nach der Struktur 24, die Beispiele 4 und 5 auf die Synthese von hochverzweigten Polyetheramiden mit Oxazolinendgruppen nach der Struktur 25.

## Beispiel 1

0,93g (51 mmol) 2-(3, 5 Dihydroxyphenyl)- 1, 3 oxazolin werden unter Stickstoff in 4,65g trockenem Sulfolan gelöst und bei 190°C 24h gerührt. Unter leichtem Stickstoffstrom wird die Lösung auf Raumtemperatur abgekühlt. Der Feststoff wird in wenig Dimethylsulfoxid gelöst und das Polymer aus Wasser ausgefällt. Der Niederschlag wird abfiltriert und bei 50°C unter Phosphorpentoxid im Vakuum getrocknet. Es wird 0,55g eines braungefärbten Polymers erhalten, welches sich gut in amidischen Lösungsmitteln und Dimethylsulfoxid löst.

Die Struktur des Oxazolingruppen tragenden hochverzweigten Polyetheramids wurde mittels 2D $^1H$- $^1H$-COSY, $^1H$-$^{13}C$-HMQC und $^1H$-$^{13}C$-HMBC Experimenten überprüft und die Struktureinheiten 3, 4, 5, 6 und 7 eindeutig nachgewiesen. Die Molmassen ($\overline{M}_n$ = 13 500 g/mol) wurden mittels GPC ermittelt. Thermogravimetrische Untersuchungen ergaben eine Temperaturstabilität bis 346°C (13,3 Gew.-% Masseverlust). Das Polymer besitzt eine Glasübergangstemperatur bei 172°C. Die Inhärentviskosität lag bei 0,104 dL/g.

$^1H$-NMR (DMSO-$d_6$, 313K): $\delta$ = 9,64 ($OH_{lin}$, I= 0,28); 9,40 ($OH_{ter}$, I= 0,65); 8,60($NH_{den}$, I= 0,04); 8,48 ($NH_{lin}$, I= 0,26); 8,34 ($NH_{ter}$, I= 0,28); 7,06 ($H_{Ar,den}$, I= 0,16); 6,89 und 6,88 ($H_{Ar,lin}$ I= 0,69); 6,69 ($H_{Ar,den}$ und $H_{Ar,ter}$, I= 0,72); 6,48 ($H_{Ar,lin}$ I= 0,40); 6,35 ($H_{Ar,ter}$, I= 0,50); 4,13 (-$OCH_{2\ den}$, I= 0,80); 4,08 (-$OCH_{2\ lin}$, I= 0,87); 3,58 (-$NCH_2$, I= 1,89)

$^{13}C$-NMR (DMSO-$d_6$, 313K): $\delta$ = 166,82 (C=$O_{ter}$); 166,35 (C=$O_{lin}$); 165,94 (C=$O_{den}$); 159,52 ($OC_{Ar,den}$); 159,45 ($OC_{Ar,lin}$); 158,42 ($HOC_{Ar,lin}$); 158,26 ($HOC_{Ar,ter}$); 136,56 ($C_{ipso,lin}$); 136,44 ($C_{ipso,ter}$); 136,35 ($C_{ipso,den}$); 107,45 ($HC_{Ar,lin}$); 106,09 ($HC_{Ar,den}$); 105,50 ($HC_{Ar,ter}$); 105,50 ($HC_{Ar,den}$); 105,19 ($HC_{Ar,ter}$);104,65 ($HC_{Ar,lin}$); 104,03 ($HC_{Ar,lin}$); 66,35 (-$OCH_{2\ den}$); 66,15 (-$OCH_{2\ lin}$); 38,82 (-$NCH_{2\ lin}$); 38,76 (-$NCH_{2\ den}$); 38,76 (-$NCH_{2\ ter}$)

## Beispiel 2

3,3g (18 mmol) 2-(3, 5 Dihydroxyphenyl)- 1, 3 oxazolin werden unter leichtem Stickstoffstrom in einem Schlenkkolben auf 220°C erhitzt. Nach 2 Minuten ist das Monomer völlig aufgeschmolzen, nach weiteren 10 Minuten bildet sich ein viskoses, gelbliches Polymer. Die Reaktion wird weitere 90 Minuten fortgesetzt. Danach wird das entstandene Polymer unter leichtem Stickstoffstrom auf Raumtemperatur abgekühlt. Der Feststoff wird in wenig Dimethylsulfoxid gelöst und das Polymer aus Wasser ausgefällt. Der Niederschlag wird abfiltriert und bei 50°C unter Phosphorpentoxid im Vakuum getrocknet. Es werden 2g weißes Polymer erhalten, welches sich gut in amidischen Lösungsmitteln und Dimethylsulfoxid löst.

Die Struktur des Oxazolingruppen tragenden hochverzweigten Polyetheramids wurde mittels 2D $^1H$- $^1H$-COSY, $^1H$-$^{13}C$-HMQC und $^1H$-$^{13}C$-HMBC Experimenten überprüft und die Struktureinheiten 3, 4, 5, 6 und 7 eindeutig nachgewiesen. Die Molmassen ($\overline{M}_n$ = 22 000 g/mol) wurden mittels GPC ermittelt. Thermogravimetrische Untersuchungen ergaben eine Temperaturstabilität bis 346°C. Das Polymer besitzt eine Glasübergangstemperatur bei 172°C. Die Inhärentviskosität lag bei 0,119 dUg.

$^1H$-NMR (DMSO-$d_6$, 313K): δ = 9,64 ($OH_{lin}$, I= 0,28); 9,40 ($OH_{ter}$, I= 0,65); 8,60($NH_{den}$, I= 0,04); 8,48 ($NH_{lin}$, I= 0,26); 8,34 ($NH_{ter}$, I= 0,28); 7,06 ($H_{Ar,den}$, I= 0,16); 6,89 und 6,88 ($H_{Ar,lin}$ I= 0,69); 6,69 ($H_{Ar,den}$ und $H_{Ar,ter}$, I= 0,72); 6,48 ($H_{Ar,lin}$ I= 0,40); 6,35 ($H_{Ar,ter}$, I= 0,50); 4,13 ($-OCH_{2\ den}$, I= 0,80); 4,08 ($-OCH_{2\ lin}$, I= 0,87); 3,58 ($-NCH_2$, I= 1,89)

$^{13}C$-NMR (DMSO-$d_6$, 313K): δ = 166,82 ($C{=}O_{ter}$); 166,35 ($C{=}O_{lin}$); 165,94 ($C{=}O_{den}$); 159,52 ($OC_{Ar,den}$); 159,45 ($OC_{Ar,lin}$); 158,42 ($HOC_{Ar,lin}$); 158,26 ($HOC_{Ar,ter}$); 136,56 ($C_{ipso,lin}$); 136,44 ($C_{ipso,ter}$); 136,35 ($C_{ipso,den}$); 107,45 ($HC_{Ar,lin}$); 106,09 ($HC_{Ar,den}$); 105,50 ($HC_{Ar,ter}$); 105,50 ($HC_{Ar,den}$); 105,19 ($HC_{Ar,ter}$);104,65 ($HC_{Ar,lin}$); 104,03 ($HC_{Ar,lin}$); 66,35 ($-OCH_{2\ den}$); 66,15 ($-OCH_{2\ lin}$); 38,82 ($-NCH_{2\ lin}$); 38,76 ($-NCH_{2\ den}$); 38,76 ($-NCH_{2\ ter}$)

## Beispiel 3

Eine Lösung aus 1,0g (5,58 mmol) 2-(3, 5 Dihydroxyphenyl)- 1, 3 oxazolin wird unter Stickstoff in 3,71mL trockenem N-Methylcaprolactam gelöst und mit 3 Gew.% Lithiumchlorid versetzt. Danach wird die Reaktionslösung 25 h bei 190°C gerührt. Unter leichtem Stickstoffstrom wird die Lösung auf Raumtemperatur abgekühlt. Der Feststoff wird in wenig Dimethylsulfoxid gelöst und das Polymer aus Methanol ausgefällt. Der Niederschlag wird abfiltriert und bei 50°C unter Phosphorpentoxid im Vakuum getrocknet. Es wird 0,55g eines gelblichen Polymers erhalten, welches sich gut in amidischen Lösungsmitteln und Dimethylsulfoxid löst.

Die Struktur des Oxazolingruppen tragenden hochverzweigten Polyetheramids wurde mittels 2D $^1H$- $^1H$-COSY, $^1H$-$^{13}C$-HMQC und $^1H$-$^{13}C$-HMBC Experimenten überprüft und die Struktureinheiten 3, 4, 5, 6 und 7 eindeutig nachgewiesen. Die Molmassen $\overline{M}_n$= 47 500 g/mol) wurden mittels GPC ermittelt. Thermogravimetrische Untersuchungen ergaben eine Temperaturstabilität bis 346°C. Das Polymer besitzt eine Glasübergangstemperatur bei 172°C. Die Inhärentviskosität lag bei 0,305 dL/g.

$^1H$-NMR (DMSO-$d_6$, 313K): δ = 9,64 ($OH_{lin}$, I= 0,28); 9,40 ($OH_{ter}$, I= 0,65); 8,60($NH_{den}$, I= 0,04); 8,48 ($NH_{lin}$, I= 0,26); 8,34 ($NH_{ter}$, I= 0,28); 7,06 ($H_{Ar,den}$, I= 0,16); 6,89 und 6,88 ($H_{Ar,lin}$, I= 0,69); 6,69 ($H_{Ar,den}$ und $H_{Ar,ter}$, I= 0,72); 6,48 ($H_{Ar,lin}$ I= 0,40); 6,35 ($H_{Ar,ter}$, I= 0,50); 4,13 ($-OCH_{2\ den}$, I= 0,80); 4,08 ($-OCH_{2\ lin}$, I= 0,87); 3,58 ($-NCH_2$, I= 1,89)

$^{13}C$-NMR (DMSO-$d_6$, 313K): δ = 166,82 ($C{=}O_{ter}$); 166,35 ($C{=}O_{lin}$); 165,94 ($C{=}O_{den}$); 159,52 ($OC_{Ar,den}$); 159,45 ($OC_{Ar,lin}$); 158,42 ($HOC_{Ar,lin}$) 158,26 ($HOC_{Ar,ter}$); 136,56 ($C_{ipso,lin}$); 136,44 ($C_{ipso,ter}$); 136,35 ($C_{ispo,den}$); 107,45 ($HC_{Ar,lin}$); 106,09 ($HC_{Ar,den}$); 105,50 ($HC_{Ar,ter}$); 105,50 ($HC_{Ar,den}$); 105,19 ($HC_{Ar,ter}$); 104,65 ($HC_{Ar,lin}$); 104,03 ($HC_{Ar,lin}$); 66,35 ($-OCH_{2\ den}$); 66,15 ($-OCH_{2\ lin}$); 38,82 ($-NCH_{2\ lin}$); 38,76 ($-NCH_{2\ den}$); 38,76 ($-NCH_{2\ ter}$)

## Beispiel 4

1.0g (4,3 mmol) Bis- 1,3- (1, 3 oxazolin- 2-yl) -5 - hydroxyphenol wird unter leichtem Stickstoffstrom in einem Dreihalskolben mit KPG - Rührer auf 220°C erhitzt. Ein Schmelzen des Monomers ist nicht zu beobachten, allerdings tritt eine Gelbfärbung der Edukte auf. Die Reaktion wird bis insgesamt 60 Minuten fortgesetzt. Danach wird das entstandene Polymer unter leichtem Stickstoffstrom auf Raumtemperatur abgekühlt. Es wird ockerfarbenes Pulver erhalten, welches unlöslich ist.

Die hohe Anzahl an funktionellen Oxazolingruppen konnte mittels FTIR- und ATR-Spektroskopie durch Oxazolinbanden bei 1639 $cm^{-1}$ nachgewiesen werden. Thermogravimetrische Untersuchungen ergaben eine Temperaturstabilität bis 375°C (9,3 Gew.% Masseverlust). Das Polymer besitzt zwei Glasübergangstemperaturen bei 120°C und 185°C.

## Beispiel 5

Eine Lösung aus 1,0g (4,3 mmol) Bis- 1,3 -(1, 3 oxazolin- 2-yl) -5 - hydroxyphenol wird unter Stickstoff in 2,58mL trockenem N-Methylcaprolactam gelöst und mit 3 Gew.% Lithiumchlorid versetzt. Danach wird die Reaktionslösung 21 h bei 190°C gerührt. Das erhaltene Polymer kann nicht mehr gelöst werden. Die hohe Anzahl an funktionellen Oxazolingruppen konnte mittels FTIR- und ATR- Spektroskopie durch Oxazolinbanden bei 1637 $cm^{-1}$ nachgewiesen werden Thermogravimetrische Untersuchungen ergaben eine Temperaturstabilität bis 375 °C (9,3 Gew.% Masseverlust). Das Polymer besitzt zwei Glasübergangstemperaturen bei 120°C und 185°C.

## Beispiel 6

0,5g (2,12 mmol) 5- (1,3 Oxazolinyl)isophthalsäure werden unter leichtem Stickstoffstrom in einem Schlenkkolben in ein auf 220°C vorgeheiztes Metallbad gegeben. Ein Aufschmelzen des Polymers ist nicht zu beobachten. Die Reaktion wird nach 10 Minuten beendet. Thermische Untersuchungen des Produkts ergaben eine Glastemperatur bei 213 °C und eine Temperaturstabilität bis 375 °C.

Die Polymerisation konnte mittels NMR nachgewiesen werden.

$^1$H-NMR (DMSO-$d_6$): $\delta$ = 13,45 (COOH, br, I= 0,42); 9,12 (NH, br, I= 0,92); 8,62 und 8.58 ($H_{Ar}$, br, I= 3,0); 4,48 (-$OCH_2$, I= 2,11); $^{13}$C-NMR (DMSO-$d_6$, 313K): $\delta$ = 164,98 (COOH); 164,87 (COO-); 164,43(CONH);159,52 ($OC_{Ar}$); 158,42 (HO-$C_{Ar}$); 63,93 (-$OCH_2$); 38,53 (-$NCH_2$)

**Beispiel 7**

0,62g (5,58 mmol) 5- (1,3 Oxazolinyl)isophthalsäure werden unter Stickstoff in 3,5 mL trockenem N-Methylcaprolactam bei 130°C gelöst und mit 3 Gew.% Lithiumchlorid versetzt. Danach wird die Reaktionslösung 20min bei 220°C gerührt. Unter leichtem Stickstoffstrom wird die Lösung auf Raumtemperatur abgekühlt und fällt das Polymer aus Methanol oder Wasser. Der Niederschlag wird abfiltriert und bei 50°C unter Phosphorpentoxid im Vakuum getrocknet. Man erhält 0,55g weißes Polymer, welches sich in amidischen Lösungsmitteln und Dimethylsulfoxid löst. Thermische Untersuchungen des Produkts ergaben eine Glastemperatur bei 205 °C und eine Temperaturstabilität bis 375 °C.
$^1$H-NMR (DMSO-$d_6$, 313K): $\delta$ = 9,1 (NH, I= 0,94); 8,87 (NH, I= 0,17); 8,60 ($NH_{den}$, I= 0,22); 8,55 ($H_{Ar,den}$, m, I= 3,0); 4,47 (-$OCH_2$, br, I= 2,2); 3,68 (-$NCH_2$, br, I= 2,4)

## Patentansprüche

1. Oxazolingruppen tragende hochverzweigte Polymere, welche aus Einheiten, die von der Struktur der allgemeinen Formel 1 abgeleitet sind, aufgebaut sind,

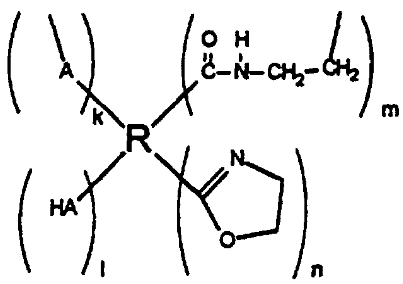

1

und bei denen die einzelnen Einheiten über eine einfache chemische Bindung der freien Valenz des Strukturelements A- und der freien Valenz des Strukturelements CO-NH-$CH_2$-$CH_2$- verbunden sind, wobei R einen Aryl-, Aralkyl- oder Aralkylenrest mit 0 bis 6 Heteroatomen darstellt, A ein aromatisch gebundenes Sauerstoffatom, ein gebundenes Schwefelatom, eine mit dem Stickstoff an R gebundene NH- Gruppe oder eine mit dem Kohlenstoffatom an R gebundene C(O)O-Gruppe darstellt und k, l, m und n ganze Zahlen von 0 bis 2 sind, welche die Anzahl der jeweiligen Substituenten (-A-, -AH, -CO-NH-$CH_2$-$CH_2$- und 2-Oxazolin) mit direkter Bindung an R angibt, und die Summe aus k, l, m und n gleich 3 ist und für jede nach der Struktur der allgemeinen Formel 1 abgeleitete in einem Polymer befindliche Einheit entweder gilt, daß die Summe aus k und l oder die Summe aus n und m gleich 2 ist.

2. Polymere nach Anspruch 1, bei denen in der Struktur nach Formel 1 R eine Struktur nach Formel 2,

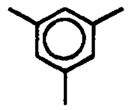

2

A ein Sauerstoffatom und die Summe aus k und l gleich 2 sind.

**3.** Polymere nach Anspruch 1, bei denen in der Struktur nach Formel 1 R eine Struktur nach Formel 2,

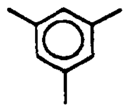

2

A ein Sauerstoffatom und die Summe aus m und n gleich 2 sind.

**4.** Polymere nach Anspruch 1, bei denen in der Struktur nach Formel 1 R eine Struktur nach Formel 2,

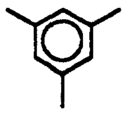

2

A eine mit dem Kohlenstoffatom an R gebundene C(O)O-Gruppe und die Summe aus k und l gleich 2 sind.

**5.** Polymere nach Anspruch 1, bei denen in der Struktur nach Formel 1 R eine Struktur nach Formel 2,

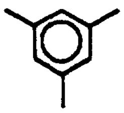

2

A eine mit dem Kohlenstoffatom an R gebundene C(O)O-Gruppe und die Summe aus m und n gleich 2 sind.

**6.** Verfahren zur Herstellung von Oxzazolingruppen tragenden hochverzweigten Polymeren nach einem der Ansprüche 1 bis 5, bei dem multivalente Monomere der allgemeinen Struktur 23

$$(S1)_m\text{-}R\text{-}(S2)_n \qquad 23$$

bei denen R identisch mit R in Struktur 1 ist, S1 eine in ihrer 2-Position an R gebundene 2-Oxazolingruppe ist, S2 eine aromatische Hydroxyl- oder eine Carbonsäure-, Thiol-, oder Aminogruppe darstellt, n und m 1 oder 2 ist und die Summe aus m und n gleich 3 ist, thermisch in Substanz oder in Gegenwart eines inerten Lösungsmittels bei Temperaturen von 150 bis 300 °C innerhalb von 2 min bis 30 h unter Inertgasatmosphäre zur Reaktion gebracht werden.

**7.** Verfahren nach Anspruch 6, bei dem die Reaktion in Gegenwart eines Katalysators durchgeführt wird.

**8.** Verfahren nach Anspruch 6, bei dem multivalente Monomere der Struktur 23 eingesetzt werden, bei denen n oder m = 1 und die Summe von n + m > 3 ist.

**9.** Verfahren nach Anspruch 6, bei dem hochsiedende amidische oder schwefelhaltige Lösungsmittel eingesetzt werden.

**10.** Verfahren nach Anspruch 6, bei dem die Reaktion bei Temperaturen von 190 bis 220 °C durchgeführt wird.

**11.** Verfahren nach Anspruch 6, bei demdie Reaktion innerhalb von 5 Minuten bis 25 Stunden durchgeführt wird.

**12.** Verwendung von Oxzazolingruppen tragenden hochverzweigten Polymeren nach einem der Ansprüche 1 bis 5 und hergestellt nach einem der Ansprüche 6 bis 11 als Additiv in unterschiedlichen Polymeren, als Blendkomponenten oder als Compatibilizer in Polymerblends oder als Vernetzer in Polymeren oder Polymerblends.

## Claims

1. Highly branched polymers bearing oxazoline groups and composed of units derived from the structure of the general formula 1

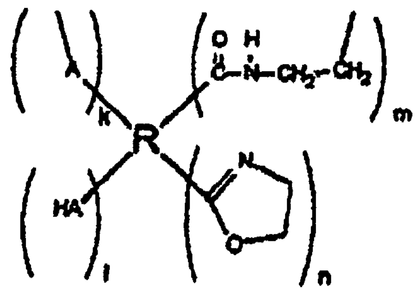

1

and in which the individual units have bonding by way of a single chemical bond to the free valency of the structural element A- and to the free valency of the structural element CO-NH-$CH_2$-$CH_2$-, where R is an aryl, aralkyl or aralkylene radical having from 0 to 6 heteroatoms, A is an aromatic-bonded oxygen atom, a bonded sulphur atom, an NH group whose nitrogen has bonding to R, or a C(O)O group whose carbon atom has bonding to R, and k, l, m and n are whole numbers from 0 to 2, giving the number of the respective substituents (-A-, -AH, -CO-NH-$CH_2$-$CH_2$- and 2-oxazoline) with direct bonding to R, and the sum of k, l, m and n is 3, and for each unit located in a polymer and derived in accordance with the structure of the general formula 1, either the sum of k and l or the sum of n and m is 2.

2. Polymers according to Claim 1, in which, in the structure according to formula 1, R is a structure according to formula 2

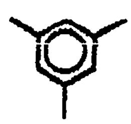

2 .

A is an oxygen atom, and the sum of k and 1 is 2.

3. Polymers according to Claim 1, in which, in the structure according to formula 1, R is a structure according to formula 2

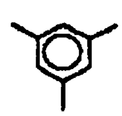

2

A is an oxygen atom, and the sum of m and n is 2.

4. Polymers according to Claim 1, in which, in the structure according to formula 1, R is a structure according to formula 2

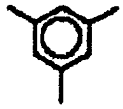

2

A is a C(O)O group whose carbon atom has bonding to R, and the sum of k and l is 2.

**5.** Polymers according to Claim 1, in which, in the structure according to formula 1, R is a structure according to formula 2

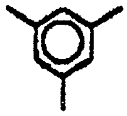

2

A is a C(O)O group whose carbon atom has bonding to R, and the sum of m and n is 2.

**6.** Process for preparing highly branched polymers bearing oxazoline groups, according to any of Claims 1 to 5, in which polyvalent monomers of the general structure 23

$$(S1)_mR\text{-}(S2)_n \quad 23$$

in which R is identical with R in structure 1, S1 is a 2-oxazoline group whose 2-position has bonding to R, S2 is an aromatic hydroxy group or a carboxylic acid group, thiol group or amino group, n and m are 1 or 2, and the sum of m and n is 3, are reacted thermally in bulk or in the presence of an inert solvent at temperatures of from 150 to 300°C within a period of from 2 min to 30 h under an inert gas.

**7.** Process according to Claim 6, in which the reaction is carried out in the presence of a catalyst.

**8.** Process according to Claim 6, in which use is made of polyvalent monomers of the structure 23 in which n or m = 1, and the sum of n and m > 3.

**9.** Process according to Claim 6, in which use is made of high-boiling amidic or sulphur-containing solvents.

**10.** Process according to Claim 6, in which the reaction is carried out at temperatures of from 190 to 220°C.

**11.** Process according to Claim 6, in which the reaction is carried out within a period of from 5 minutes to 25 hours.

**12.** Use of highly branched polymers bearing oxazoline groups, according to any of Claims 1 to 5, and prepared according to any of Claims 6 to 11, as additive in various polymers, as blend components, or as compatibilizer in polymer blends, or as crosslinking agent in polymers or polymer blends.

**Revendications**

**1.** Polymères hautement ramifiés portant des groupes oxazoline, élaborés à partir d'unités qui sont dérivées de la structure de formule générale 1

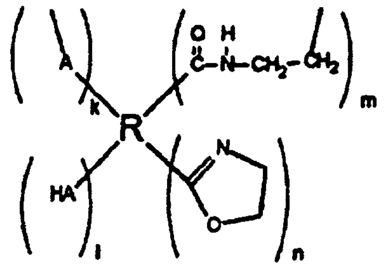

1

et dans lesquels les différentes unités sont liées via une liaison chimique simple de la valence libre de l'élément de structure A- et de la valence libre de l'élément de structure CO-NH-$CH_2$-$CH_2$-, où R représente un radical aryle, aralkyle ou aralkylène comprenant 0 à 6 hétéroatomes, A représente un atome d'oxygène lié aromatiquement, un atome de soufre lié, un groupe NH lié avec l'azote à R ou un groupe C(O)O lié avec l'atome de carbone à R et k, l, m et n sont des nombres entiers de 0 à 2, qui indiquent le nombre des différents substituants (-A-, -AH, -CO-NH-$CH_2$-$CH_2$- et 2-oxazoline) avec une liaison directe à R et la somme de k, l, m et n est égale à 3 et, pour chaque unité se trouvant dans un polymère, dérivée de la structure selon la formule générale 1, la somme de k et l ou la somme de n et m est égale à 2.

**2.** Polymères selon la revendication 1, dans lesquels, dans la structure selon la formule 1, R représente une structure selon la formule 2,

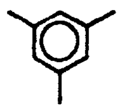

2

A représente un atome d'oxygène et la somme de k et 1 est égale à 2.

**3.** Polymères selon la revendication 1, dans lesquels, dans la structure selon la formule 1, R représente une structure selon la formule 2,

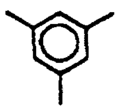

2

A représente un atome d'oxygène et la somme de m et n est égale à 2.

**4.** Polymères selon la revendication 1, dans lesquels, dans la structure selon la formule 1, R représente une structure selon la formule 2,

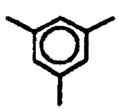

2

A représente un groupe C(O)O lié avec l'atome de carbone à R et la somme de k et 1 est égale à 2.

**5.** Polymères selon la revendication 1, dans lesquels, dans la structure selon la formule 1, R représente une structure selon la formule 2,

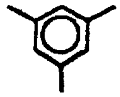

2

A représente un groupe C(O)O lié avec l'atome de carbone à R et la somme de m et n est égale à 2.

**6.** Procédé pour la préparation de polymères hautement ramifiés portant des groupes oxazoline selon l'une quelconque des revendications 1 à 5, dans lequel on fait réagir des monomères multivalents de structure générale 23

$$(S1)_m R\text{-}(S2)_n, \qquad 23$$

dans laquelle R est identique à R dans la structure 1, S1 est un groupe 2-oxazoline lié avec sa position 2 à R, S2 est un groupe aromatique hydroxyle, ou un groupe acide carboxylique, thiol ou amino, n et m représentent 1 ou 2 et la somme de m et n est égale à 3, thermiquement dans la masse ou en présence d'un solvant inerte à des températures de 150 à 300°C en 2 minutes jusqu'à 30 heures sous une atmosphère de gaz inerte.

**7.** Procédé selon la revendication 6, dans lequel la réaction est réalisée en présence d'un catalyseur.

**8.** Procédé selon la revendication 6, dans lequel on utilise des monomères multivalents de structure 23, dans lesquels n ou m = 1 et la somme de n+m > 3.

**9.** Procédé selon la revendication 6, dans lequel on utilise des solvants amide ou contenant du soufre présentant un point d'ébullition élevé.

**10.** Procédé selon la revendication 6, dans lequel la réaction est réalisée à des températures de 190 à 220°C.

**11.** Procédé selon la revendication 6, dans lequel la réaction est réalisée en 5 minutes jusqu'à 25 heures.

**12.** Utilisation des polymères hautement ramifiés portant des groupes oxazoline selon l'une quelconque des revendications 1 à 5 et préparés selon l'une quelconque des revendications 6 à 11 comme additif dans différents polymères, comme composants de mélange ou comme agent de compatibilité dans des mélanges de polymères ou comme réticulants dans des polymères ou des mélanges de polymères.